# EUROPEAN PATENT APPLICATION

(11) **EP 1 162 577 A2**
(43) Date of publication of application: **12.12.2001**
(21) Application number: 01113900.3
(22) Date of filing: 07.06.2001
(51) Int. Cl.: G07C 9/00

(54) **Biometric identification using pore prints**

(30) Priority: 08.06.2000 US 589102
(71) Applicant: Dew Engineering and Development Limited, Ottawa, Ontario K1G 4G2 (CA)
(72) Inventor: Borza, Stephen J., Ottawa, Ontario KIS 3N9 (CA)
(74) Representative: Kehl, Günther, Dipl.-Phys.

(57) **Abstract**

The invention relates to a pore imaging system and method. According to the method, a template is formed using a high-quality imager for imaging a pore image. A lower-quality imager is used to capture pore image data for registration against the template in order to authorise or identify individuals. The lower-quality imager provides less information than the high-quality imager. For example, the lower-quality imager may have a lower resolution per unit area, a smaller image area, or both. A system for implementing the method is also disclosed.

## Description

### Field of the Invention

The present invention relates generally to biometric identification and more particularly to a method and system for identifying individuals based on an analysis of the size, shape, and/or distribution of the individual's pores.

### Background of the Invention

Biometric techniques for determining the identity of individuals are increasingly used in personal authentication, recognition, and/or access systems. These techniques use biometric identifiers or human characteristics to verify or identify an individual. The fact that most human characteristics are unique to each individual, are difficult to reproduce by others, and are easily converted to electronic data, is particularly advantageous in biometric identification applications.

Biometric techniques have been based on the analysis and comparison of fingerprints, handprints, palm prints, grasping pressure, retinal scans, thermal images, and/or voice patterns, to name a few. Historically, fingerprints have been the most widely used biometric identifiers, as evident from law enforcement's extensive use of fingerprinting. The recent trends in biometric identification have been toward automating personal authentication, recognition, and/or access systems. Most current techniques are correlation methods that use automated detection systems connected to computer databases, for comparing detected biometric data to biometric data stored in a database, to confirm or determine the identity of an individual. Such automated systems have been used to identify individuals before granting access to cars, computers, home or business offices, hotel rooms, and in general, any sensitive or restricted area.

The disadvantages of biometric techniques include high implementation costs, cumbersome detection systems, in addition to some reliability problems. Associated with the latter is the ability of fraudulent individuals to circumvent biometric systems, the tendency of some human characteristics to vary with time, and inconsistent sampling methods used to obtain biometric information. For example, retinal scanning, which is presently considered amoung the most tamper proof methods of identification, is limited in that blood vessel patterns vary over time. Furthermore, in retinal scanning the detection apparatus is near the eye, which many individuals find intrusive and inconvenient.

Fingerprint analysis is perhaps the most widely used and studied biometric technique. The analysis of fingerprints is discussed in the following references which are hereby incorporated by reference:
Xiao Qinghan and Bian Zhaoqi,: An approach to Fingerprint Identification By Using the Attributes of Feature Lines of Fingerprint," IEEE Pattern Recognition, pp 663, 1986;
C.B. Shelman, " Fingerprint Classification - Theory and Application," Proc. 76 Carnahan Conference on Electronic Crime Countermeasures, 1976;
Feri Pernus, Stanko Kovacic, and Ludvik Gyergyck, "Minutiae Based Fingerprint Registration," IEEE Pattern Recognition, pp 1380, 1980;
J.A. Ratkovic, F.W. Blackwell, and H.H. Bailey, "Concepts for a Next Generation Automated Fingerprint System," Proc, 78 Carnahan Conference on Electronic Crime Countermeasures, 1978;
K. Millard, "An approach to the Automatic Retrieval of Latent Fingerprints," Proc. 75 Carnahan Conference on Electronic Crime Countermeasures, 1975;
Wegstein, *An Automated Fingerprint Identification System*, NBS special publication, U.S. Department of Commerce/National Bureau of Standards, ISSN 0083-1883; no. 500-89, 1982; and
Moenssens, Andre A., Fingerprint Techniques, Chilton Book Co., 1971; and, Wegstein and J.F. Rafferty, *The LX39 Latent Fingerprint Matcher*, NBS special publication, U.S. Department of Commerce/National Bureau of Standards; no. 500-36, 1978,

Typically in electronic fingerprint matching, a live fingerprint is scanned and electronically digitized. The digitized data generally contains information pertaining to characteristic features of the fingerprint, such as ridge endings, points of ridge bifurcation, and the core of a whorl i.e., fingerprint minutiae. The digitized data is then compared with stored data relating to fingerprints that have been obtained previously from corresponding authorized persons i.e., fingerprint templates. When a match is detected, within a predetermined level of security in the form of a predetermined false acceptance rate, the individual is identified and a corresponding action is performed.

In general, there are two types of errors associated with fingerprint identification. The first is false reject (Type I) error and the second is false accept (Type II) error. False accept errors occur when there are enough similarities between fingerprints of two individuals, that one is mistaken for the other. A false reject error occurs for a variety of reasons, and refers to when an individual is not identified even though the individual is an authorized user registered with the system.

It has been suggested that the underlying cause of errors in fingerprint analysis is that the amount of data from a fingerprint is too limited for it to be used in a biometric identification system involving a large number of users. Typically, there are only 30 to 40 minutia points available in a fingerprint. Others suggest that the underlying cause of errors in fingerprint analysis arises from the variations in the pressure with which the finger is applied to an optical or other sensor. Alternatively, poor performance of fingerprint verification systems is attributed to the fact that the final verification decisions are based upon comparisons of small, isolated regions of the fingerprint, when in fact a small sampling of the ridges does not provide enough detail to accurately verify or identify an individual.

One way to increase the accuracy of fingerprint identification is to include the analysis of pores within the ridges of the fingers e.g. sweat pores. Pores are naturally occurring physical characteristics of the skin, which have conventionally been ignored in biometric identification. However, a typical finger contains about 50 to 300 pores, each of which varies in size and shape, and that is used in combination with other pores and pure locations for uniquely identifying an individual. Furthermore, the analysis of 'pore prints' generally obviates the fraudulent problems encountered with fingerprint identification, since latent fingerprints do not generally contain a lot of detail about pore size, shape and/or distribution. Consequently, the use of latent fingerprints, which often fools most fingerprint identification systems, does not deceive pore print identification systems.

In a paper entitled *Automated System for Fingerprint Authentication* (SPIE, Vol. 2277, p. 210-223), hereby incorporated by reference, Stosz et al. describe a multilevel verification process wherein pore locations and minutia data are used separately to confirm and/or cross-check the identity of individuals. That is, initially pore locations are matched against pore locations, and a correlation score is obtained from the pore matching that results in either a successful or failed identification. Next, assuming the pore match indicated a successful identification, minutia points are independently matched to minutia points to verify the identification established by pore matching. It has been suggested by Stosz et al. that a high-resolution scanner of at least 800 DPI or greater is required to accurately resolve pores.

U.S. patent No. 5,982,914 to Lee et al., hereby incorporated by reference, disclose a method of identifying an individual using an analysis of both pore locations and minutia data. The method comprises obtaining from an individual during a registration process, a fingerprint image having at least one registration pore and at least one registration macrofeature e.g., a ridge or minutia. In a bid step, a fingerprint image having at least one bid pore and at least one bid macrofeature is obtained. Bid associated data is compared to the registration associated data to produce a correlation score, wherein a successful or failed identification is obtained based on comparison of the correlation score to a predetermined threshold value. In the teachings of Lee et al. the analyses were accomplished using a commercially available 500 DPI resolution scanner.

Although the prior art clearly benefits from pure print technology, it does not truly exploit the advantages of pore print identification. Specifically, in the system disclosed by Lee et al, the commercially available 500 DPI resolution scanner is not able to extract pore detail relating to the size and shape of the pores. In fact, the teachings ignore the detailed pore morphology and concentrate on pore distribution with respect to fingerprint minutiae. As a result, this system incurs many of the same limitations as conventional fingerprint identification systems. Specifically, the individual must have an undamaged fingerprint, the imaging device must be able to acquire a full fingerprint image (i.e., a surface area defined approximately by a ½ inch by 1 inch rectangle), and the individual must precisely align the predetermined finger or thumb in a manner that allows a proper matching. In the system disclosed by Stosz et al. the high-resolution scanner, which is large, bulky, expensive, and difficult to manufacture, is the greatest disadvantage.

It has now been found that a high-resolution scanner having a large scanning area is useful for recording full pore detail for building a comprehensive template database, but is not necessary for scanning live pore prints. Specifically, it is only necessary to scan a small sampling area of a live pore print for comparison to a portion of the stored pore print template, since pores, unlike fingerprint minutiae, are distinguishable from much smaller cross-sections. For example, if there are typically only 30 to 40 minutia points available from a fingerprint covering an area of approximately one inch by half an inch, then an imaging device with a scanning area one quarter of that size statistically captures a quarter of the minutia points. Clearly, it would be highly inaccurate to base a biometric identification system on such a small amount of information. Furthermore, it is highly unlikely that the characteristic minutiae, i.e., the core of the whirl, would be captured with a small sensor due to inconsistent sampling methods. In pore print analysis, the size, shape and location of the pores all contribute detailed information, thus increasing the accuracy of the biometric identification system and allowing a smaller scanning area to be used. In addition, the large number of pores typically available in a small cross-section of skin further contributes to the accuracy when sampling a smaller cross section. The difficulties in fingerprint analysis associated with inconsistent sampling methods are not a problem in pore print analysis, since any portion of the pore print is used to characterise the individual i.e., there is no need to capture localised minutiae as required in fingerprint analysis. Often, pore print registration provides a suitable cross-section of pares for characterisation on a first attempt.

In addition, it has now been found that it is not necessary for the live pore print and the stored pore print template to be oblained with the same resolution for accurate comparison and correlation. If the stored pore print template is obtained with a high-resolution imaging device, then it contains enough detail for comparison to a pore print obtained with a substantially lower resolution imaging device. There are many advantages to having a high-resolution imaging device for obtaining pore prints template for storing in a computer database, and cheaper lower-quality imaging devices, i.e., smaller or lower resolution, for scanning live pore prints.

It is an object of the present invention to provide a biometric identification system based on pore print analysis that overcomes the disadvantages of the prior art.

It is an object of the present invention to provide a system for recording topographical surfaces with sufficient detail to identify an individual based on the shape, size, and distribution of a portion of the individual's pores.

It is a further object of the present invention to provide a biometric identification system that comprises a high-resolution 'base' scanner for obtaining pore print templates to be stored in a pore print template database, and at least one smaller, cheaper, or lower resolution scanner for capturing live pore prints, for comparison with the stored pore print templates.

### Summary of the Invention

The present invention relates to a biometric identification system that uses a high-resolution imaging device to map a sampling of an authorised individual's pores, and a second lower-quality imaging device to acquire subsequent samplings for comparison with data pertaining to the high-resolution image, for the purpose of verifying the identity of the individual.

The advantage of this biometric identification system is that the high-resolution imaging device, which is generally expensive relative to lower-quality devices, is used as an authorisation device to record pore detail for a pore print database, and the lower-quality imaging device is used in the personal authentication, recognition, and/or access systems. The high-resolution imaging device records pore prints with sufficient detail, that a comprehensive database is formed. The lower-quality imaging device records live pore prints of sufficient size and resolution for comparison to pore prints in the pore print database, for the purpose of accurately identifying an individual.

In accordance with the invention there is provided a biometric authentication system comprising:
an authentication imaging device for capturing data relating to a pore image from an individual; and,
a processor for comparing stored data pertaining to an authorised individual and having more information than the captured data with the captured data, the processor for, in dependence upon the comparison results, performing one of authorising the individual, identifying the individual, and rejecting the individual.

In accordance with the invention there is provided a biometric identification method comprising the steps of:
scanning at least one pore print from at least one authorised individual using a first high-resolution scanner;
storing data pertaining to the at least one pore print from the at least one authorised individual;
scanning a different pore print from a user using a second lower-quality scanner;
comparing data from the different pore print to the stored data pertaining to the at least one pore print from the at least one authorised individual; and
authorising the user, if the comparison of the data pertaining to the different pore print and the at least one pore print indicates that the user is of the at least one authorised individual.

In accordance with the invention there is provided a method for identifying an individual, the method comprising the steps of:
scanning a pore image from an authorised individual using a first imaging device, the pore image acquired from a predetermined topographical surface on the authorised individual;
storing data pertaining to the pore image as a biometric template containing data selected from a size, shape, density, and distribution of a plurality of pores;
scanning a plurality of pores of a user using a second lower-quality imaging device, the plurality of pores corresponding to at least a portion of the predetermined topographical surface;
comparing the plurality of pores from the user to the pore template;
identifying a portion of the pore template corresponding to a portion of the topographical surface to which the plurality of pores corresponds;
determining a correspondence of pores between the portion of the pore template and the plurality of pores, in order to determine a probability of the user being the authorised individual;
in dependence upon the determined probability, identifying the individual.

In accordance with the invention there is provided a method for identifying a user, the user selected from a plurality of registered users, each registered user having data relating to at least one pore image stored in a central database, the at least one pore image detected with a high-resolution imaging device, and the data relating to at least one of a size, shape and distribution of a plurality of pores, the method comprising the steps of:
scanning an area containing pores from an individual using a different lower-quality imaging device to provide scanned data, at least a portion of the scanned data including data relating to pores corresponding to a portion of the plurality of pores in the pore image;
comparing the scanned data to each of the at least one pore image stored in the central database to determine a correspondence between the scanned data and each of the at least one pore image stored in the central database;
when the correspondence is indicative of a match within predetermined limits, identifying the user as one of the registered users.

### Brief Description of the Drawings

A complete understanding of the present invention and of the above and other advantages may be gained from a consideration of the following description of the preferred embodiments taken into conjunction with the accompanying drawings in which:
FIG. 1 is a block diagram of a system for biometric identification according to an embodiment of the present invention;
FIG. 2 is a block diagram of a system for biometric identification according to another embodiment of the present invention;
FIG. 3 is a block diagram of a system for biometric identification according to another embodiment of the present invention;
FIG. 4 is a block diagram of a system for biometric identification according to another embodiment of the present invention; and
FIG. 5 is a flow diagram of a method for identifying an individual using the system of the present invention.

### Detailed Description

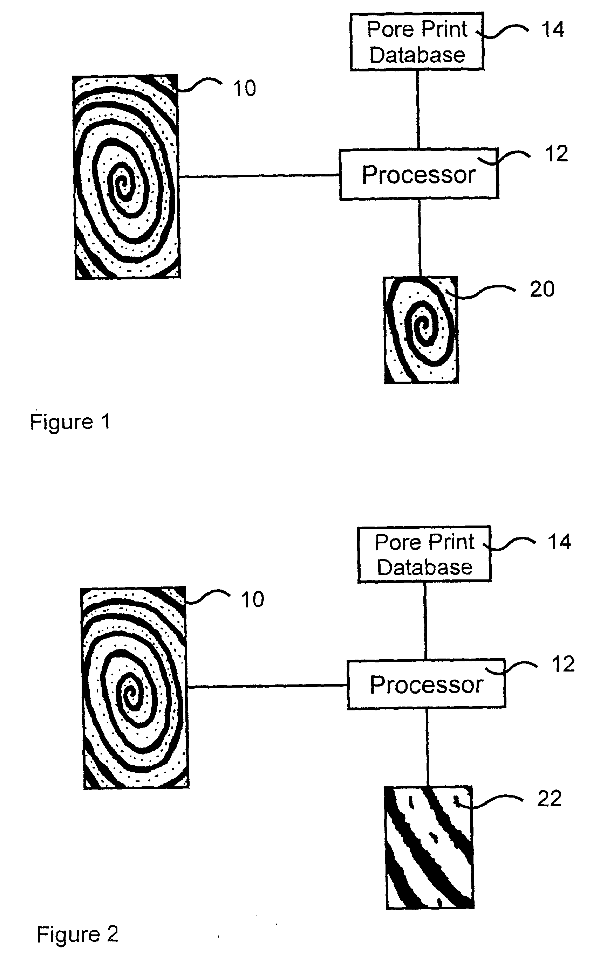

Referring to FIG. 1, a block diagram of an embodiment of the invention is shown. The biometric identification system includes two different components for detecting biometric information. The first component is a high-quality, high-resolution imaging device 10 capable of scanning detailed pore morphology from a sampling area selected from the epidermis of an authorised individual, for creating a database of pore print templates and corresponding authorised users. The second component is a lower-quality imaging device 20 for capturing/scanning live pore images of a comparable sampling area, for correlating the live pore images to those in the database of pore print templates. A processor 12 is coupled to the high-resolution imaging device to process the pore print image before it is stored in the pore print database of pore print templates 14. Processor 12 is also coupled to the low-quality imaging device to process the live pore print image before it is compared to each stored pore print template, and for comparing the live pore print template to the stored pore print templates in the pore print database 14.

A pore print template, analogous to a fingerprint template, is an electronic record of various pore features. The template is more compact than the pore image and is more easily stored, transmitted, and compared. The pore template contains data associated with the size and shape of each of the pores, in addition to data associated with pore distribution and density. Optionally, the pore template contains other information about the sampling area, such as ridges, ridge endings, ridge bifurcations, creases, hair follicles, changes in skin pigmentation, etc. In the prior art, a pore print is generally associated with the sweat pores in the ridges of a finger, which typically have sizes in the range of 60 to 250 microns. However, other pores are equally characteristic, including pores located in the thumbs, palms, toes, heels, finger tips, back of the hand, side of the hand, side of the thumb, knuckles, nose, chin, etc.

The term 'high-resolution imaging device', as used herein, refers to an imaging device with a resolution sufficient to extract detailed pure morphology, i.e., pore size and shape, for clearly distinguishing and identifying individual pores. Conventionally, a high-resolution imaging device, e.g., a contact imaging device, having a resolution of at least 800-1200 DPI is used, but of course higher resolutions are preferred. Ideally, each pore is represented by about 100 pixels for adequate pore characterisation. For pore location identification far fewer pixels are required, and thus about 10 pixels is sufficient.

Moreover, the high-resolution imaging device should be able to capture at least one pore print which is representative of the individual seeking identification i.e., a global representation of the individuals pores. Specifically, the scanned area should be large enough to encompasses each of the subsequent sub-sampling areas used to identify the individual. An approximately ½ inch by 1 inch scanning area, or contact area in the case of a contact imaging device, is generally sufficient for these purposes, particularly when the scanned object is a fingerprint. Alternatively, a movable scanner head is used.

The term 'lower-quality', as used herein, refers to a lower resolution per unit area, a smaller scanning area, insufficient magnification, or some combination of characteristics that causes an authentication imaging device to be less desirable than another for detecting highly detailed information. In general, the pore print image captured with the lower-quality imaging device has less information than the pore print image captured with a high-resolution imaging device. Alternatively, the term lower-quality means that the imaging device is less expensive to manufacture and/or operate with respect to time and money. The scanning area of the lower-quality imaging device should be large enough to capture enough pores to characterise the individual. A sampling of a group of five pores is usually sufficient. The resolution should be high enough to capture enough pore detail for comparison to pore print templates obtained with the high-resolution imaging device.. Typically, the higher the resolution of the high-resolution imaging device, the lower the resolution of the lower-quality imaging device can be, within limits.

The use of at least two different imaging devices, allows a more expensive, high-quality device to be used in one 'base' location, and one or more less expensive, lower-quality devices to be used in one of several 'field' locations. This design is highly advantageous, since a party choosing to implement the system of the present invention, is only required to obtain one of the less expensive field devices for each personal authentication, recognition, and/or access system. In such cases, each user of said personal authentication, recognition, and/or access system is required to pre-register using the more expensive, high-quality device in the 'base' location.

FIG. 1 illustrates an embodiment of the invention wherein the lower-quality imaging device has a smaller sampling area and a lower resolution per unit area than the high-quality, high-resolution device. For example, the high-quality, high-resolution imaging device has a sampling area of approximately ½ inch by 1 inch and a resolution of 2000 DPI, and the lower-quality device has a resolution of 1000 DPI and a sampling area of approximately ¼ inch by ¼ inch.

FIG. 2 illustrates an embodiment of the invention wherein the lower-quality imaging device has the same resolution per unit area, but a smaller sampling area than the high-quality, high-resolution device. For example, the high-quality, high-resolution imaging device has a sampling area of approximately ½ inch by ½ inch and a resolution of 3000 DPI, and the lower-quality device a sampling area of approximately ⅛ inch by ⅛ inch and a resolution of 3000 DPI. This embodiment is particularly advantageous, because it truly exploits the benefits of pore print identification methods. Specifically, since the sampling area is very small, the larger topographical details such as ridges or creases do not substantially contribute to characterising the individual, and the analysis is based on pore morphology alone. The fact that the scanning area, and hence imaging device, is very small relative to conventional imaging devices, is highly advantageous.

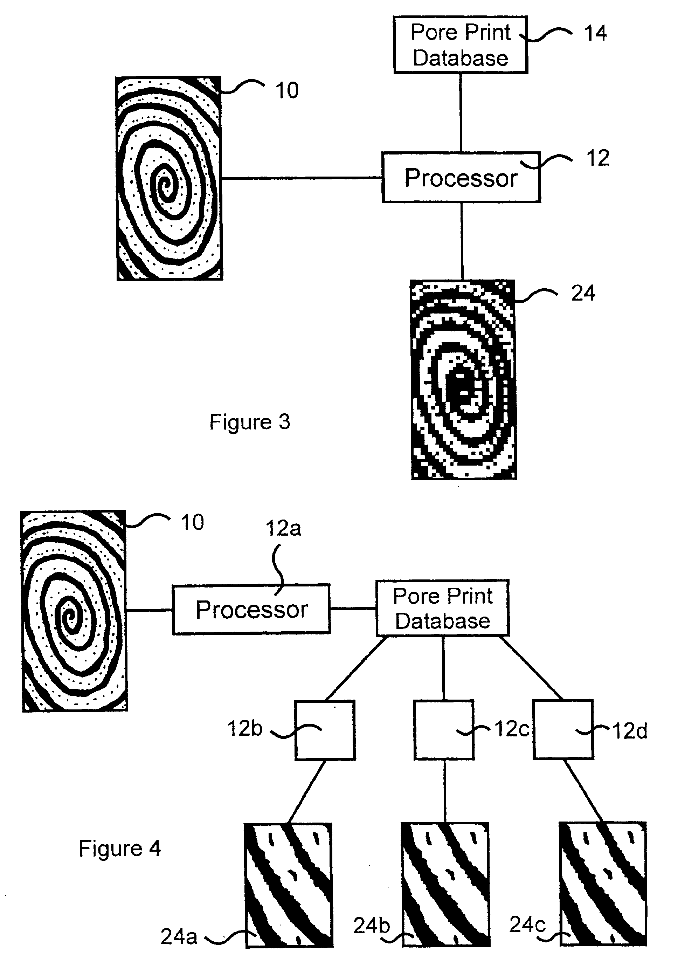

FIG. 3 illustrates an embodiment of the invention wherein the lower-quality imaging device has the same sized sampling area, but a lower resolution per unit area than the high-quality, high-resolution device. This embodiment takes advantage of the technique of using two different imaging devices. For example, in a previously implemented system using conventional fingerprint authentication methods, the system is upgraded to a higher security level, simply by updating the fingerprint/ pore print database with pore prints acquired with the high-resolution imaging device of the present invention. Consequently, this embodiment includes significant low cost advantages.

FIG. 4 demonstrates an embodiment of the invention wherein the high-resolution imaging device 10 acquires pore print templates from a base location, and lower-quality imaging devices 24a-24c acquire pore print templates from at least one other location. Processors 12a and 12b-12d are connected to high and low-resolution imaging devices, respectively. The pore print database is portable between high and low resolution imaging devices e.g., is stored on a portable storage medium such as a floppy disk, a smart card, a CD, etc. Alternatively, pore print templates obtained with the high-resolution devices are transferred to the other locations where they are stored for subsequent comparisons. Further alternatively, the database is accessible via remote access.

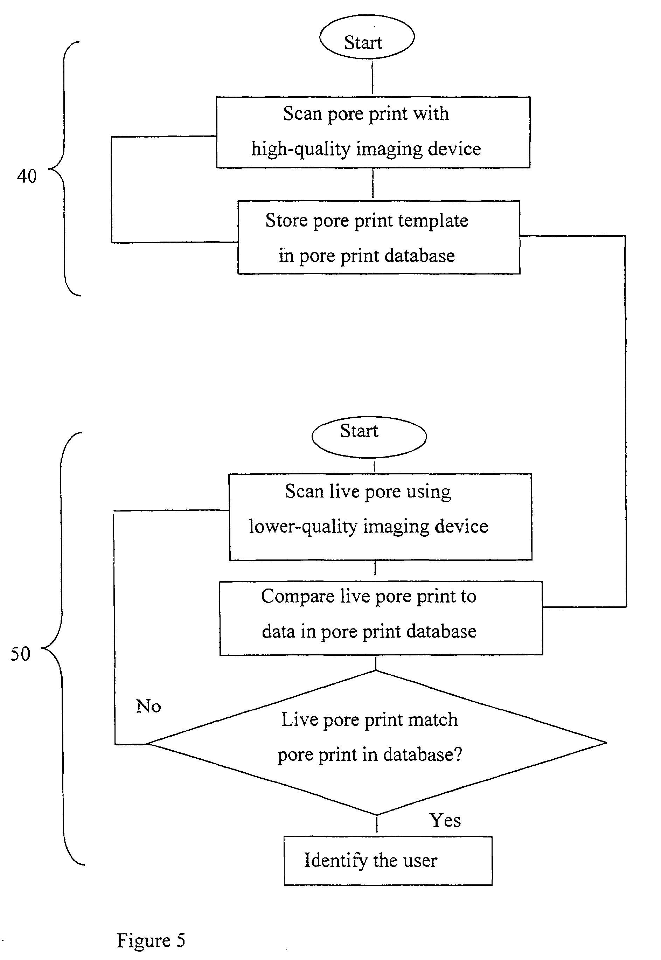

Referring to Fig. 5, a flow diagram of an embodiment of the invention for identifying an individual is shown. The process involves two phases. In the first phase 40, a database of pore prints corresponding to a plurality of authorised individuals is created. In the second phase 50, an individual requiring identification is registered with the system.

To acquire a pore print for the pore print database, an authorised individual places a predetermined sampling area, which for exemplary purposes includes a portion of the individual's finger, onto the high-resolution imaging device. The acquired fingerprint/pore image is processed, e.g., is digitised, undergoes noise reduction, contrast enhancement, etc., and is electronically stored as a pore print template in the pore print database. This sequence is repeated until all authorised users have been registered with the system using the high-resolution imaging device. Optionally, security information associated with each of the authorised individuals is stored with the corresponding pore print template.

Once the pore print database is established, the system is prepared to register individuals. An individual seeking authentication places a comparable sampling area on the lower-quality imaging device, i.e. a sampling area corresponding to a section of the predetermined sampling area placed onto the high-resolution imaging device by the authorised individuals. The captured pore image is processed, e.g., is digitised, undergoes noise reduction, contrast enhancement, etc. This 'live' pore print template is then compared to a plurality of pore print templates in the pore print database 14, wherein the stored data has more information than the captured data. Alternatively, when the individual's identity and/or the sampling area is identified at the time of registration, the live pore print template is only compared to the pore template associated with said individual. When the high-resolution and lower-quality imaging devices provide images of different sizes, the comparison includes mapping the smaller image onto the larger image. Depending on the results of the comparison, e.g. in the form of a registration value, the individual is authorised, identified, or rejected.

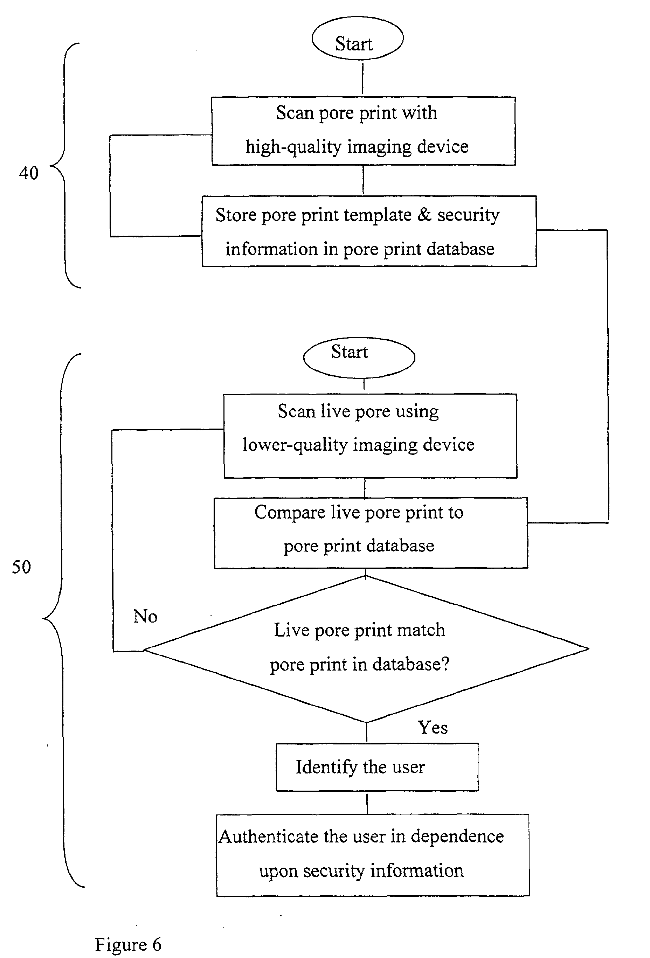

In the embodiment illustrated in FIG 6, the optionally stored security data is accessed and analysed to determine whether the individual is granted access to a system or structure.

In another embodiment, not illustrated, the pores are used to align the ridges within a fingerprint, to provide higher accuracy in identifying the individual.

It is to be noted that a significant advantage of the present invention lies in the versatility of the lower-quality imaging devices. Specifically, the size, weight, precision, physical reliability, and cost of the lower-quality imaging devices is tailored to suit the predetermined applicalion. For example, some pore detail is sacrificed in applications wherein the lower-quality imaging device is necessarily less expensive.

Another advantage of using a lower-quality imaging device for detecting pore prints, is the small device size that is obtainable. Small imaging devices have potential for use with smart cards, credit cards, electronic keypads, computer keyboards, computer pointing devices, secure access devices, personal weapons, pay telephones, car ignition systems, debit devices, door knobs, keys, switches, etc. Moreover, small biometric identification devices are less obtrusive, easily disguised, and portable.

It is thus seen from the foregoing that a simple system, including two characteristically different imaging devices, provides a unique method of registering individuals seeking authentication, that is more versatile, accurate, economical and desirable than the prior art.

Although the invention hereof has heen described by way of example of preferred embodiments, it will be evident that other adaptations and modifications can be employed without departing from the spirit and scope thereof.

## Claims

1. A biometric authentication system comprising:
an authentication imaging device for capturing data relating to a pore image from an individual; and,
a processor for comparing the captured data with stored pore print data having substantially more information than the captured data and pertaining to an authorised individual, the processor for, in dependence upon the comparison results, performing one of authorising the individual, identifying the individual, and rejecting the individual.

2. A biometric authentication system as defined in claim 1, wherein the stored data relates to a larger image area than the captured data.

3. A biometric authentication system as defined in claim 2, wherein the stored data relates to an image having a higher resolution than the captured data.

4. A biometric authentication system as defined in claim 2, comprising means for determining data within the stored data relating to a same or similar image area to that of the captured data.

5. A biometric authentication system as delined in claim 1, wherein the stored data relates to an image having a higher resolution than the captured data.

6. A biometric authentication system as defined in claim 1, comprising means for providing security data associated with the stored data in dependence upon a substantial match between the captured data and a portion of the stored data.

7. A biometric authentication system as defined in claim 1, wherein the captured data relates to a live pore image of a plurality of pores from the individual.

8. A biometric authentication system as defined in claim 1, comprising:
a first imaging device for capturing a pore image from an authorised individual; and,
electronic storage means for storing data relating to the pore image.

9. A biometric authentication system as defined in claim 8 wherein the first imaging device comprises a contact imaging device and wherein the authentication imaging device comprises a contact imaging device having a lower resolution per unit area than the first imaging device.

10. A biometric authentication system as defined in claim 8, wherein the first imaging device comprises a contact imaging device and wherein the authentication imaging device comprises a contact imaging device having a smaller contact area than the first imaging device.

11. A biometric authentication system according to claim 8, wherein the first imaging device has a resolution of at least 800 DPI and a scanning window of at least one inch by one half inch.

12. A biometric authentication system according to claim 11, wherein the authentication imaging device has a resolution per unit area that is substantially same as that of the first imaging device and a scanning window that is substantially smaller than that of the first imaging device.

13. A biometric authentication system according to claim 11, wherein the authentication imaging device has a lower resolution per unit area than the first imaging device.

14. A biometric identification method comprising the steps of:
scanning at least one pore print from at least one authorised individual using a first high-resolution scanner;
storing data pertaining to the at least one pore print from the at least one authorised individual;
scanning a different pore print from a user using a second lower-quality scanner;
comparing data from the different pore print to the stored data pertaining to the at least one pore print from the at least one authorised individual; and
authorising the user, if the comparison of the data pertaining to the different pore print and the at least one pore print indicates that the user is of the at least one authorised individual.

15. A biometric identification method according to claim 14, further comprising the steps of:
storing security data associated with cach of the at least one authorised individual with the data pertaining to the at least one pore print from the at least one authorised individual; and, wherein the step of authorising the user, is performed in dependence upon the stored security data associated with the at least one authorised individual.

16. A biometric identification method according to claim 15, wherein the second lower-quality scanner is for scanning a substantially smaller area than the first high-resolution scanner.

17. A biometric identification method according to claim 15, wherein the second lower-quality scanner is for scanning a same area as the first high-resolution scanner at a second lower resolution.

18. A method for identifying an individual, the method comprising the steps of:
scanning a pore image from an authorised individual using a first imaging device, the pore image acquired from a predetermined topographical surface on the authorised individual;
storing data pertaining to the pore image as a biometric template containing data selected from a size, shape, density, and distribution of one or more pores;
scanning a plurality of pores of a user using a second lower-quality imaging device, the plurality of pores corresponding to at least a portion of the predetermined topographical surface;
comparing data pertaining to one or more pores from the user to the biomctric template;
identifying a portion of the biometric template corresponding to a portion of the topographical surface to which the plurality of pores corresponds;
determining a correspondence of pores between the portion of the biometric template and the plurality of pores, in order to determine a probability of the user being the authorised individual;
in dependence upon the determined probability, identifying the individual.

19. A method for identifying a user, the user selected from a plurality of registered users, each registered user having data relating to at least one pure image stored in a central database, the at least one pore image captured with a high-resolution imaging device, and the data relating to at least one of a size, shape and distribution of a plurality of pores, the method comprising the steps of:
scanning an area containing pores from a user using a different lower-quality imaging device to provide scanned data, at least a portion of the scanned data including data relating to pores corresponding to a portion of the plurality of pores in the pore image;
comparing the scanned data to the data relating to each of the at least one pore image stored in the central database to determine a correspondence between the scanned data and the data relating to each of the at least one pore image stored in the central database;
when the correspondence is indicative of a match within predetermined limits, identifying the user as one of the registered users.

20. A method for identifying a user as defined in claim 19, wherein the plurality of pores corresponds to pores within ridges of the user's fingertip.

21. A method for identifying a user as defined in claim 20, wherein the central database is stored on a portable storage medium.

22. A method for identifying a user as defined in claim 21, wherein the different lower-quality imaging device has a smaller scanning area than the high-resolution imaging device.

23. A method for identifying a user as defined in claim 21, wherein the different lower-quality imaging device has a lower resolution per unit area than the high-resolution imaging device.

24. A method for identifying a user as defined in claim 19, wherein the different lower-quality imaging device has a smaller scanning area than the high-resolution imaging device.

25. A method for identifying a user as defined in claim 19, wherein the different lower-quality imaging device has a lower resolution per unit area than the high-resolution imaging device.

26. A method for identifying a user as defined in claim 19, wherein the plurality of pores corresponds to pores in areas selected from a thumb, a palm, and a side of the hand.
